# EUROPEAN PATENT APPLICATION

(11) **EP 4 205 881 A1**
(43) Date of publication of application: **05.07.2023**
(21) Application number: 21861362.8
(22) Date of filing: 18.08.2021
(51) Int. Cl.: B22F 1/00, B22F 9/08, C22B 7/00, C22C 9/06, C22C 30/02, C22B 15/00, C22B 23/00, C22B 23/02, C22C 19/03, C22B 3/06

(54) **ALLOY POWDER, METHOD FOR MANUFACTURING SAME, AND METHOD FOR RECOVERING VALUABLE METAL**

(30) Priority: 28.08.2020 JP 2020144467
(71) Applicant: SUMITOMO METAL MINING CO., LTD., Tokyo 105-8716 (JP)
(72) Inventor: TOGASHI, Ryo, Niihama-shi, Ehime 792-0002 (JP)
(74) Representative: Jones, Nicholas Andrew
(86) International application number: PCT/JP2021/030249
(87) International publication number: WO 2022/044934

(57) **Abstract**

Provided are: an alloy powder in which nickel and cobalt can be easily dissolved in an acid and stably leached with an acid; a manufacturing method with which an alloy powder that enables stable acid leaching can be obtained at low cost; and a method for recovering a valuable metal using the manufacturing method. An alloy powder according to the present invention includes copper (Cu), nickel (Ni), and cobalt (Co) as constituents, has a 50% cumulative diameter (D50) of 30 um to 85 um in the volume particle size distribution, and has an oxygen content of 0.01 mass% to 1.00 mass%.

## Description

### TECHNICAL FIELD

The present invention relates to an alloy powder, an alloy powder production method, and a valuable metal recovery method.

### BACKGROUND ART

In recent years, lithium ion batteries have become popular for their lightweight and high power. A well-known lithium ion battery has a structure including an outer case, and positive and negative electrode materials, a separator, and an electrolytic solution, which are sealed in the outer case. The outer case includes a metal, such as iron (Fe) or aluminum (Al). The negative electrode material includes a negative electrode current collector (e.g., a copper foil) and a negative electrode active material (e.g., graphite) bonded to the current collector. The positive electrode material includes a positive electrode current collector (e.g., an aluminum foil) and a positive electrode active material (e.g., lithium nickelate, lithium cobaltate) bonded to the current collector. The separator includes, for example, a porous polypropylene resin film. The electrolytic solution contains an electrolyte, such as lithium hexafluorophosphate (LiPF₆).

Hybrid cars and electric vehicles are among the major applications of lithium ion batteries. According to the life cycle of such vehicles, therefore, a huge number of lithium ion batteries, which are now installed in them, are expected to be discarded in the future. Some lithium ion batteries are also discarded if found defective during the manufacturing process. It is desirable to reuse such used batteries and such defective batteries occurring in the manufacturing process (hereinafter such batteries will be referred to as "discarded lithium ion batteries") as a resource.

A proposed conventional technique for the reuse includes a pyrometallurgical smelting process that includes entirely melting discarded lithium ion batteries in a high-temperature furnace (melting furnace). Such a pyrometallurgical smelting process includes melting crushed discarded lithium ion batteries; separating valuable metals, such as cobalt (Co), nickel (Ni), and copper (Cu), which are to be recovered, and less valuable metals, such as iron (Fe) and aluminum (Al), based on the difference in oxygen affinity between the valuable and less valuable metals; and recovering the valuable metals. This technique oxidizes the less valuable metals as much as possible to form slag while it prevents the oxidation of the valuable metals as much as possible and recovers them in the form of an alloy.

The alloy as recovered mainly includes copper (Cu), nickel (Ni), and cobalt (Co). Such valuable metals (Cu, Ni, and Co) might be recovered at low costs if a pyrometallurgical smelting process makes it possible to separate and recover each of the valuable metals from the alloy. For example, such a pyrometallurgical smelting process may include introducing the recovered alloy into a copper smelting process. Unfortunately, the recovered alloy usually contains a certain amount of iron (Fe). If the recovered alloy is introduced into a copper smelting process, therefore, cobalt (Co) and iron (Fe) will be turned into oxides, so that it will be difficult to recover elementary cobalt (Co).

Thus, studies have been conducted on techniques using a hydrometallurgical process for recovering valuable metals from the recovered alloy. Specifically, such a process includes subjecting the recovered alloy (copper-nickel-cobalt alloy) to acid leaching treatment to dissolve nickel (Ni) and cobalt (Co) into a solvent. The resulting solution containing nickel and cobalt is then separated from copper remaining as an undissolved residue. The copper, nickel, and cobalt are then recovered using an existing smelting process.

For example, Patent Document 1 discloses a method for recovering valuable metals including nickel and cobalt from discarded lithium ion batteries containing nickel and cobalt. This recovery method includes a melting step that includes melting discarded lithium ion batteries to produce a molten material; an oxidation step that includes oxidizing the molten material or the discarded batteries; a slag separation step that includes separating slag from the molten material to recover an alloy including valuable metals; and a dephosphorization step that includes separating phosphorus from the alloy (see claim 1 of Patent Document 1). Patent Document 1 also discloses a valuable metal recovery process that includes converting the resulting alloy into shot (granules) after the dephosphorization step; and dissolving the alloy shot with an acid and then subjecting the solution to an element separation process that includes in order removing iron, separating and recovering copper, separating nickel and cobalt, recovering nickel, and recovering cobalt (see paragraphs [0047] to [0053] of Patent Document 1).

Patent Document 1: Japanese Patent No. 5853585

### DISCLOSURE OF THE INVENTION

### Problems to be Solved by the Invention

As mentioned above, a certain method using a hydrometallurgical process has been proposed for recovering valuable metals from the recovered alloy (copper-nickel-cobalt alloy). There is, however, room for improvement in such a conventional method. In general, the copper-nickel-cobalt alloy has high corrosion resistance. In some cases, even when immersed in sulfuric acid for more than 24 hours, the copper-nickel-cobalt alloy particles will not dissolve at all depending on their size, shape, surface roughness, component distribution, and other features. In some cases, therefore, even if the alloy is subjected to acid leaching treatment, it will be difficult to separate and recover a sufficient amount of nickel and cobalt.

In view of these problems, the inventor has conducted intensive studies. As a result, the inventor has found that the median diameter and the oxygen content of copper-nickel-cobalt alloy particles are important factors for the acid leaching treatment of them and that appropriate control of these factors allows easy dissolution of nickel and cobalt with acid so that these components will stably undergo the acid leaching. The inventor has also found that the use of water atomization to form an alloy powder and the pressure and flow rate of water being sprayed during the atomization are important for production of alloy particles capable of stably undergoing acid leaching.

It is, therefore, an object of the present invention to provide an alloy powder from which nickel and cobalt can be easily dissolved with acid and which allows these components to stably undergo acid leaching. It is another object of the present invention to provide a method for inexpensive production of an alloy powder that allows the components to stably undergo acid leaching. It is a further object of the present invention to provide a valuable metal recovery method using such a production method.

### Means for Solving the Problems

The present invention encompasses aspects (1) to (11) shown below. In the present description, any numerical range specified using "to" refers to a range including the upper and lower limits of the range. In other words, the expression "X to Y" has the same meaning as "X or more and Y or less".
(1) An alloy powder including copper (Cu), nickel (Ni), and cobalt (Co) as constituents, the alloy powder having a volume particle size distribution with a particle diameter at a cumulative percentage of 50% (D50) of 30 um or more and 85 um or less , the alloy powder having an oxygen content of 0.01% by mass or more and 1.00% by mass or less.
(2) The alloy powder according to aspect (1), wherein the particle diameter at a cumulative percentage of 50% (D50) is 35 um or more and 55 um or less.
(3) The alloy powder according to aspect (1) or (2), wherein D10, D50, and D90 satisfy the relation 2.50 ≤ (D90 - D10)/D50 ≤ 3.00, D10, D50, and D90 respectively representing a particle diameter at a cumulative percentage of 10%, a particle diameter at a cumulative percentage of 50%, and a particle diameter at a cumulative percentage of 90% in the volume particle size distribution.
(4) The alloy powder according to any one of aspects (1) to (3), including: 24.0 to 80.0% by mass of copper (Cu); 0.1 to 15.0% by mass of cobalt (Co); 10.0 to 50.0% by mass of nickel (Ni); 0.01 to 10.0% by mass of iron (Fe); and 0.01 to 5.0% by mass of manganese (Mn) with the remainder being unavoidable impurities.
(5) A method for producing the alloy powder according to any one of aspects (1) to (4), the method including the steps of: preparing an alloy raw material including copper (Cu), nickel (Ni), and cobalt (Co) as constituents; producing a molten alloy by melting the alloy raw material by heating; and producing alloy particles by allowing the molten alloy to fall inside a chamber of an atomizer and spraying water onto the falling molten alloy to cool and atomize the molten alloy, wherein the step of producing alloy particles includes spraying the water at a pressure of 6 MPa or more and 20 MPa or less and setting, at 5.0 or more and 7.0 or less, the ratio (water-to-molten alloy ratio) of the mass flow rate of the water being sprayed to the mass flow rate of the falling molten alloy.
(6) The method according to aspect (5), wherein the step of producing alloy particles includes allowing the molten alloy to fall at a mass flow rate of 10 kg/minute or more and 75 kg/minute or less.
(7) The method according to aspect (5) or (6), wherein the step of producing alloy particles includes spraying the water at a temperature of 2°C or more and 35°C or less.
(8) The method according to any one of aspects (5) to (7), wherein the step of producing a molten alloy includes heating the molten alloy at a temperature of 1,430°C or more and 1,590°C or less.
(9) The method according to any one of aspects (5) to (8), wherein the alloy raw material is derived from discarded lithium ion batteries.
(10) A method for producing the alloy powder according to any one of aspects (1) to (4), the method including the steps of: preparing discarded lithium ion batteries as a raw material; melting the raw material by heating to form an alloy including copper (Cu), nickel (Ni), and cobalt (Co) and a slag; separating the slag and recovering the alloy as an alloy raw material; producing a molten alloy by melting the alloy raw material by heating; and producing alloy particles by allowing the molten alloy to fall inside a chamber of an atomizer and spraying water onto the falling molten alloy to cool and atomize the molten alloy, wherein the step of producing alloy particles includes spraying the water at a pressure of 6 MPa or more and 20 MPa or less and setting, at 5.0 or more and 7.0 or less, the ratio (water-to-molten alloy ratio) of the mass flow rate of the water being sprayed to the mass flow rate of the falling molten alloy.
(11) A valuable metal (Ni, Co, and Cu) recovery method including the steps of: producing an alloy powder by the method according to any one of aspects (5) to (10); and subjecting the alloy powder to leaching treatment with an acid solvent to selectively dissolve nickel (Ni) and cobalt (Co) from the alloy powder into the acid solvent and thereby to separate copper (Cu).

### Effects of the Invention

The present invention provides an alloy powder from which nickel and cobalt can be easily dissolved with acid and which allows these components to stably undergo acid leaching. The present invention also provides a method for inexpensive production of an alloy powder that allows the components to stably undergo acid leaching. The present invention further provides a valuable metal recovery method using such a production method.

### BRIEF DESCRIPTION OF THE DRAWINGS

FIG. 1 is a schematic diagram showing alloy powder production by water atomization; and
FIG. 2 is a flowchart showing an example of a process for alloy powder production.

### PREFERRED MODE FOR CARRYING OUT THE INVENTION

Specific modes of the present invention (hereinafter referred to as "embodiments") will be described. It should be noted that the embodiments described below are not intended to limit the present invention and may be altered or modified in various ways without departing from the gist of the present invention.

### Alloy Powder

The alloy powder according to an embodiment includes copper (Cu), nickel (Ni), and cobalt (Co) as constituents, has a volume particle size distribution with a particle diameter at a cumulative percentage of 50% (D50) of 30 um or more and 85 um or less , and has an oxygen content of 0.01% by mass or more and 1.00% by mass or less.

The alloy powder includes copper, nickel, and cobalt as constituents. In this context, the expression "includes copper, nickel, and cobalt as constituents" means that copper, nickel, and cobalt are main components and is not intended to exclude other components or unavoidable impurities. The term "unavoidable impurities" refers to contaminant components that are unavoidably derived from the raw material and the manufacturing equipment and typically at a concentration of 1,000 ppm (0.1% by mass) or less.

The alloy powder may be produced from any raw material. The alloy powder may be a product produced by melting metal copper, metal nickel, and metal cobalt and solidifying and powdering the resulting molten material. The alloy powder may also be a product produced by reducing an oxide or oxides, such as copper oxide, and powdering the reduction product. In particular, the alloy powder is preferably a product produced from discarded lithium ion batteries used as a raw material. In this case, valuable metals (Cu, Ni, and Co) will be efficiently recovered from discarded lithium ion batteries.

The alloy powder may have any appropriate composition. Specifically, the alloy powder should contain copper, nickel, and cobalt at concentrations higher than the concentration of unavoidable impurities (1,000 ppm). The alloy powder may consist of copper, nickel, and cobalt, or may include other components in addition to copper, nickel, and cobalt. For example, when produced from discarded lithium ion batteries used as a raw material, the alloy powder will often contain iron (Fe) and manganese (Mn). In such a case, the alloy powder typically has the composition: 24.0 to 80.0% by mass copper (Cu); 0.1 to 15.0% by mass cobalt (Co); 10.0 to 50.0% by mass nickel (Ni); 0.01 to 10.0% by mass iron (Fe); and 0.01 to 5.0% by mass manganese (Mn), with the remainder being unavoidable impurities.

The alloy powder has a volume particle size distribution with a particle diameter at a cumulative percentage of 50% (D50) of 30 um or more and 85 um or less. The particle diameter at a cumulative percentage of 50% (D50) refers to the particle diameter at which the cumulative volume (counted from the smallest particle size) is 50% in the volume particle size distribution, and is also called the median particle diameter. If an alloy powder with a D50 of more than 85 um is immersed in an acid, such as sulfuric acid, to undergo acid leaching treatment, dissolution of nickel and cobalt from the alloy powder will be insufficient. This may result in a low recovery ratio of nickel and cobalt. In particular, if having a D50 of more than 100 µm, the alloy powder will often contain coarse particles with sizes of at least 500 µm, from which nickel and cobalt are difficult to obtain by acid leaching. More preferably, the D50 is 55 um or less. If an alloy powder with a D50 of less than 30 um is subjected to acid leaching treatment, the resulting solution and copper residue may be difficult to separate and recover. Moreover, excessive dissolution of nickel and cobalt may rapidly occur from the alloy powder with a D50 of less than 30 µm, which means that stable acid leaching will be difficult. More preferably, the D50 is 35 um or more.

The alloy powder has an oxygen content of 0.01% by mass or more and 1.00% by mass or less. If an alloy powder with an oxygen content of more than 1.00% by mass is immersed in sulfuric acid to undergo acid leaching treatment, dissolution of nickel and cobalt from the alloy powder will be insufficient. This may result in a low recovery ratio of nickel and cobalt. More preferably, the oxygen content is 0.60% by mass or less. To undergo acid leaching easily, the alloy powder preferably has as low an oxygen content as possible. It should be noted, however, that even if the oxygen content is reduced to less than 0.01% by mass, acid leaching of nickel and cobalt from the alloy powder will be no longer facilitated. The cost required to produce the alloy powder with an oxygen content of less than 0.01% by mass will also be high. The alloy powder should, therefore, have an oxygen content of 0.01% by mass or more.

The alloy powder preferably satisfies the relation 2.50 ≤ (D90 - D10)/D50 ≤ 3.00, in which D10, D50, and D90 respectively represent a particle diameter at a cumulative percentage of 10%, a particle diameter at a cumulative percentage of 50%, and a particle diameter at a cumulative percentage of 90% in the volume particle size distribution. In this regard, "(D90 - D10)/D50" is an indicator of variations in particle size distribution (particle size distribution range). The smaller (D90 - D10)/D50 value means the sharper particle size distribution. A (D90 - D10)/D50 value of more than 3.00 indicates that there are large variations in the particle size distribution. This means that the alloy powder contains coarse particles, from which nickel and cobalt will be difficult to obtain by acid leaching. For facilitation of acid leaching, the variations in the particle size distribution are preferably as small as possible. It should be noted, however, that the cost required to produce an alloy powder with excessively small variations in particle size distribution would be high. Therefore, (D90 - D10)/D50 is preferably 2.50 or more.

### Alloy Powder Production Method According to First Embodiment

An alloy powder production method according to a first embodiment includes the steps of: preparing an alloy raw material including copper (Cu), nickel (Ni), and cobalt (Co) as constituents (alloy raw material preparation step); producing a molten alloy by melting the alloy raw material by heating (molten alloy production step); and producing alloy particles by allowing the molten alloy to fall inside a chamber of an atomizer and spraying water onto the falling molten alloy to cool and atomize the molten alloy (alloy particle production step). The step of producing alloy particles (alloy particle production step) includes spraying the water at a pressure of 6 MPa or more and 20 MPa or less and setting, at 5.0 or more and 7.0 or less, the ratio (water-to-molten alloy ratio) of the mass flow rate of the water being sprayed to the mass flow rate of the falling molten alloy. Each of the steps will be described in detail below.

### Alloy Raw Material Preparation Step

The alloy raw material preparation step includes preparing an alloy raw material including copper (Cu), nickel (Ni), and cobalt (Co) as constituents. The alloy raw material may be any type as long as it includes copper, nickel, and cobalt in a metallic state. The alloy raw material may include elementary copper, nickel, and cobalt in the form of a mixture or may include copper, nickel, and cobalt in the form of an alloy. In the alloy raw material, copper, nickel, and cobalt may exist in any form as long as they can form a molten alloy during the subsequent molten alloy production step.

The alloy raw material is preferably derived from discarded lithium ion batteries. It is desirable to reuse discarded lithium ion batteries as a resource. Moreover, discarded lithium ion batteries contain a large amount of valuable metals (Cu, Ni, and Co). Thus, the use of the alloy raw material derived from discarded lithium ion batteries allows high-efficiency, low-cost separation and recovery of valuable metals. Recycled materials other than discarded lithium ion batteries may also be used. For example, some electronic parts or devices contain a large amount of valuable metals (Cu, Ni, and Co). The alloy raw material may also be derived from such electronic parts or devices.

### Molten Alloy Production Step

The molten alloy production step includes producing a molten alloy by melting the prepared alloy raw material by heating. Specifically, the molten alloy production step may include placing the alloy raw material in a crucible furnace and heating it in the crucible furnace to produce a flowable molten alloy. The heating temperature is preferably 1,430°C or more and 1,590°C or less so that the alloy particle production step (described below) can produce alloy particles as desired.

### Alloy Particle Production Step

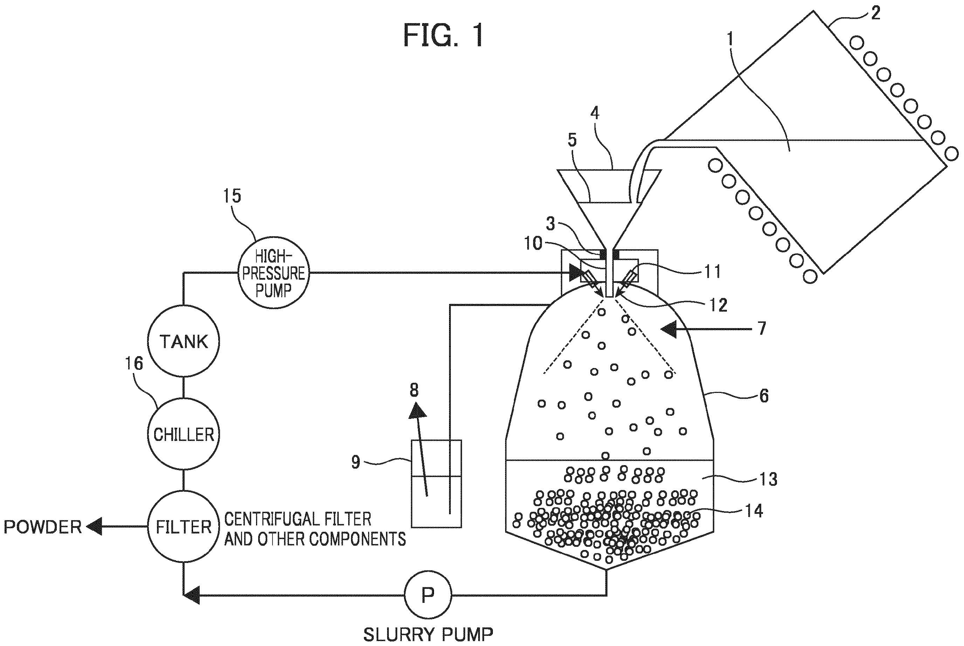

The alloy particle production step includes producing alloy particles by water atomization. Specifically, the alloy particle production step includes producing alloy particles by allowing the resulting molten alloy to fall inside the chamber of an atomizer and spraying water onto the falling molten alloy to cool and atomize the molten alloy. FIG. 1 shows an example of the configuration of an atomizer employed in this step. The atomizer includes a tundish 4 with a nozzle 3 at its base; a chamber 6; a gas discharge structure 9; high-pressure water nozzles 11; a water supply pump 15; and a chiller 16.

A molten alloy 1 produced by heating in a crucible furnace 2 is poured into the tundish 4 of the atomizer. During this operation, the molten alloy supply rate is adjusted so that the molten alloy surface level 5 is kept constant. After being poured into the tundish 4, the molten alloy is allowed to fall into the chamber 6 through the nozzle 3. Since the molten alloy surface level 5 is kept constant, the amount of the molten alloy falling per unit time through the nozzle (the mass flow rate of the falling molten alloy) is kept constant depending on the diameter of the nozzle. The chamber 6 is configured to contain inert gas 7, such as nitrogen gas, at a pressure higher than atmospheric pressure and thereby to prevent air from entering the chamber 6. The chamber 6 is also provided with the gas discharge structure 9 which is configured to discharge gas 8, such as hydrogen gas, from the chamber 6 while preventing air from entering the chamber 6. High-pressure water 12 is sprayed from the high-pressure water nozzles 11 onto the molten alloy 10 falling inside the chamber 6. The angle between the water being sprayed and the falling molten alloy is adjusted to maximize the yield of the resulting alloy particles. Specifically, an even number of high-pressure water nozzles 11 (e.g., two, four, or six high-pressure water nozzles 11) are arranged so as to form a pair of two nozzles facing each other around the falling molten alloy 10 located on the central axis. The directions of the high-pressure water nozzles 11 are adjusted so that the relative angle (apex angle) between the water sprays from the facing pair of high-pressure water nozzles 11 is 30° to 50°. In other words, the water spray makes an angle (vertical angle) of 15° to 25° with respect to the falling molten alloy 10.

In the step of producing alloy particles, the pressure of water being sprayed is set at 6 MPa or more and 20 MPa or less. A water pressure of less than 6 MPa will cause the resulting alloy particles to have excessively large sizes. This may result in a low recovery ratio of nickel and cobalt when the alloy particles are subjected to acid leaching treatment. A water pressure of more than 20 MPa will cause the resulting alloy particles to be excessively fine. This may make it difficult to achieve stable acid leaching and may lower the ability of acid leaching to separate and recover the solution and the undissolved residue (copper residue). Moreover, spraying water at a higher pressure requires using a more expensive pump and increases the alloy particle production cost. In view of various requirements including commercial requirements, the water pressure should be 20 MPa or less.

The ratio (water-to-molten alloy ratio) of the mass flow rate of water being sprayed to the mass flow rate of the falling molten alloy is set at 5.0 or more and 7.0 or less. In this regard, the mass flow rate of the falling molten alloy is the average amount of the molten alloy falling per unit time, and the mass flow rate of water being sprayed is the average amount of water being sprayed per unit time. This means that the mass flow rates of the falling molten alloy and water being sprayed may vary with time and that in such a case, the averages may be used. If the water-to-molten alloy ratio is less than 5.0, the molten alloy will be insufficiently cooled, so that the resulting alloy particles will have excessively large sizes. If the water-to-molten alloy ratio is more than 7.0, the molten alloy will be cooled too fast, so that the resulting alloy particles will be excessively fine.

The mass flow rate of the falling molten alloy is preferably 10 kg/minute or more and 75 kg/minute or less. Allowing the molten alloy to fall at an excessively low mass flow rate may easily cause production of fine particles with sizes less than 10 µm, which are difficult to undergo stable acid leaching and will lower the ability to separate and recover metals. In such a case, the alloy particles may be produced with low productivity, which will be a problem in terms of production cost. If the molten alloy is allowed to fall at an excessively high mass flow rate, it will be necessary to increase the water supply pressure of the pump or to increase the number of operating water supply pumps, which will increase the production cost. At a mass flow rate within the above range, the falling molten alloy can be processed in an amount of 600 kg or more and 4,500 kg or less per hour. This makes it possible to produce alloy particles at a scale reasonable in terms of costs for smelting business.

The water is preferably sprayed at a temperature of 2°C or more and 35°C or less. An excessively low water temperature may cause the water to freeze in the piping, if the facility ceases to operate, and may cause a problem such as water leak. An excessively high water temperature will tend to increase the size of the resulting alloy particles. This may worsen their ability to undergo acid leaching or cause a problem with production management during acid leaching. The water temperature may be controlled by adjusting the chiller temperature setting.

The molten alloy preferably has a temperature of 1,430°C or more and 1,590°C or less. At an excessively low temperature, the molten alloy may poorly flow through the tundish nozzle and may clog the nozzle. At an excessively low temperature, the molten alloy may also be poorly crushed with the high-pressure water and may form coarse alloy particles. Heating the molten alloy at an excessively high temperature will be a waste of energy and may shorten the life of the refractory material used during the heating. Heating the molten alloy at an excessively high temperature may also raise the temperature of the circulating high-pressure water, so that the chiller's cooling capacity should be increased, which will lead to increased costs.

As described above, the water atomization under the adjusted conditions enables commercial-scale, low-cost production of a copper-nickel-cobalt alloy powder. Such an alloy powder has a particle diameter at a cumulative percentage of 50% (D50) of 30 um or more and 85 um or less and has an oxygen content of 0.01% by mass or more and 1.00% by mass or less. Such an alloy powder has a high ability to undergo acid leaching and a high ability to undergo separation and recovery of metals. Specifically, such an alloy powder may be subjected to acid leaching treatment with sulfuric acid, in which copper can be precipitated in the form of copper sulfide from the alloy powder and nickel and cobalt can be separated and recovered in the form of a solution. From such an alloy powder, therefore, valuable metals (Cu, Ni, and Co) can be separated and recovered at high efficiency and low cost.

The water atomization could be replaced by gas atomization, which includes spraying high-pressure gas onto the molten alloy to cool it. If produced by gas atomization, the alloy powder would have a low oxygen content and a high ability to undergo acid leaching. Unfortunately, gas atomization must be performed in a vacuum chamber to produce the alloy powder and also has the problem of low productivity. Therefore, water atomization is employed for the method according to the embodiment. It can be observed that the alloy particles produced by gas atomization and those produced by water atomization are different in that the former have near-spherical shapes whereas the latter often have irregular shapes.

### Alloy Powder Production Method According to Second Embodiment

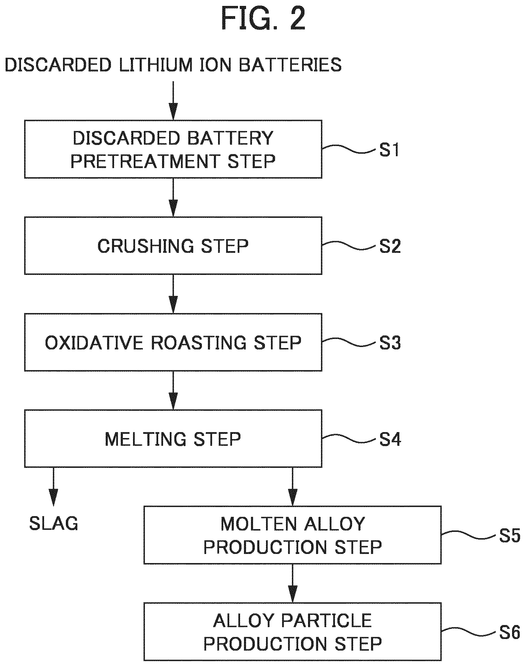

The alloy powder production method according to a second embodiment includes the steps of: preparing discarded lithium ion batteries as a raw material (raw material preparation step); melting the raw material by heating to form an alloy including copper (Cu), nickel (Ni), and cobalt (Co) and a slag (melting step); separating the slag and recovering the alloy as an alloy raw material (slag separation step); producing a molten alloy by melting the alloy raw material by heating (molten alloy production step); and producing alloy particles by allowing the molten alloy to fall inside a chamber of an atomizer and spraying water onto the falling molten alloy to cool and atomize the molten alloy (alloy particle production step). The step of producing alloy particles (alloy particle production step) includes spraying the water at a pressure of 6 MPa or more and 20 MPa or less and setting, at 5.0 or more and 7.0 or less, the ratio of the mass flow rate of water being sprayed to the mass flow rate of the falling molten alloy. FIG. 2 is a flowchart showing an example of the process according to this embodiment. Each of the steps will be described in detail below.

### Discarded Battery Pretreatment Step in Raw Material Preparation Step

The raw material preparation step may include first pretreating discarded batteries. The discarded battery pretreatment step (S1) is performed in order to prevent explosion of discarded lithium ion batteries, to detoxify discarded lithium ion batteries, and to remove outer cases. Lithium ion batteries have a sealed system in which the electrolytic solution and other components are contained. Crushing intact lithium ion batteries is dangerous because of the risk of explosion, and some measures should preferably be taken for discharging and for removal of the electrolytic solution. In many cases, the outer case includes a metal, such as aluminum (Al) or iron (Fe), and such a metallic outer case is relatively easy to recover directly. Thus, the discarded battery pretreatment step (S1) that includes removing the electrolytic solution and the outer case will increase the safety and the recovery ratio of valuable metals (Cu, Ni, and Co) .

The pretreatment of discarded batteries may be performed using any specific method. For example, the pretreatment method may include mechanically opening holes in the discarded batteries with needle-shaped blades to allow the electrolytic solution to flow out. Alternatively, the pretreatment method may include heating the discarded batteries to burn the electrolytic solution and thereby to detoxify them.

### Crushing Step in Raw Material Preparation Step

The crushing step (S2) may include crushing the components of the discarded lithium ion batteries to obtain a crushed product. The resulting crushed product is used as a raw material to be subjected to melting. This step is performed in order to increase the efficiency of the reaction during a pyrometallurgical smelting process. Such an increase in the reaction efficiency will lead to an increase in the recovery ratio of valuable metals (Cu, Ni, and Co). Any specific crushing method may be used. The crushing may be performed using a conventionally known crushing machine, such as a cutter mixer.

The discarded battery pretreatment step (S1) may include recovering aluminum (Al) or iron (Fe) from the outer cases of the discarded lithium ion batteries. In this case, the pretreatment step (S1) may include crushing the removed outer cases; and then sieving the crushed product with a sieve shaker. When made of aluminum (Al), the case can be easily crushed with low power into particles, so that aluminum (Al) can be efficiently recovered. Magnetic force sorting may also be used to recover iron (Fe) from the outer case.

### Oxidative Roasting Step

If necessary, the melting step may be preceded by the step of oxidatively roasting the crushed discarded lithium ion batteries (crushed product) to form an oxidatively roasted product (oxidative roasting step (S3)). The oxidative roasting step will reduce the carbon content of the discarded lithium ion batteries. In a case where the discarded lithium ion batteries contain an excessive amount of carbon, this step will remove such an amount of carbon by oxidation and thus accelerate the integration of valuable metals into an alloy in the subsequent melting step. In the melting step in which the valuable metals are reduced to form localized molten fine particles, carbon can physically interfere with the gathering of molten fine particles (valuable metals). Without the oxidative roasting step, therefore, carbon may interfere with the gathering of molten fine particles and thus interfere with the separability between the alloy (metallic material) and the slag, which may lead to a reduction in valuable metal recovery ratio. On the other hand, the previous removal of carbon by the oxidative roasting will facilitate the gathering of molten fine particles (valuable metals) in the melting step and provide a further increase in valuable metal recovery ratio. The existence of an excessive amount of carbon may also cause phosphorus (P), which is an easily reducible impurity, to undergo reduction reaction and thereby to be incorporated into the alloy together with valuable metals. In this regard, the previous removal of excessive carbon will prevent alloy contamination with phosphorus. In this regard, the carbon content of the oxidatively roasted product is preferably less than 1% by mass.

Moreover, the oxidative roasting step, if performed, will prevent uneven oxidation. The oxidative roasting step preferably includes performing the treatment (oxidative roasting) at a degree of oxidation that allows the less valuable metal (e.g., Al) in the discarded lithium ion batteries to be oxidized. The degree of oxidation can be easily controlled by controlling the temperature, time, and/or atmosphere of the oxidative roasting. Thus, the degree of oxidation can be more strictly controlled in the oxidative roasting, which prevents uneven oxidation.

The degree of oxidation may be controlled as described below. In general, aluminum (Al), lithium (Li), carbon (C), manganese (Mn), phosphorus (P), iron (Fe), cobalt (Co), nickel (Ni), and copper (Cu) preferentially oxidize in the order of Al > Li > C > Mn > P > Fe > Co > Ni > Cu. The oxidative roasting may include allowing oxidation to proceed until the whole amount of aluminum (Al) is oxidized. The oxidation may be accelerated to such an extent that iron (Fe) is partially oxidized, but the degree of oxidation should be kept at such a level that oxidation and distribution of cobalt (Co) into slag are prevented.

The oxidative roasting is preferably carried out in the presence of an oxidizing agent. This allows removal of the carbon (C) impurity by oxidation and allows efficient oxidation of aluminum (Al). The oxidizing agent may be any type. For ease of handling, the oxidizing agent is preferably an oxygen-containing gas (e.g., air, pure oxygen, an oxygen-rich gas). For example, the oxidizing agent is preferably introduced in an amount approximately 1.2 times the chemical equivalent of the oxidizing agent required to oxidize all oxidation target materials.

The oxidative roasting preferably includes heating at a temperature of 600°C or more, more preferably at a temperature of 700°C or more. In such a case, carbon can be oxidized with higher efficacy, and the heating can be performed for a shorter period of time. The heating temperature is preferably 900°C or less. In such a case, the thermal energy cost can be kept low, and the oxidative roasting can be performed with high efficiency.

The oxidative roasting may be performed using a known roasting furnace. The oxidative roasting is preferably performed in a preliminary furnace different from the melting furnace for use in the subsequent melting step. The oxidative roasting furnace may be any type capable of roasting the raw material while supplying the oxidizing agent (e.g., oxygen) for the oxidation treatment in its interior. The oxidative roasting furnace may be, for example, a conventionally known rotary kiln or tunnel kiln (hearth-type furnace).

### Melting Step

The melting step (reductive melting step (S4)) may include melting the raw material (crushed discarded lithium ion batteries or oxidatively roasted product) by heating to form an alloy (metallic material) including copper (Cu), nickel (Ni), and cobalt (Co), and to form a slag above the alloy according to the difference between their specific gravities. Specifically, the raw material is heated to form a molten material. The molten material includes an alloy and a slag in a molten state. Then, the resulting molten material is converted to a solidified molten material. The solidified molten material includes the alloy and the slag in a solidified state. The alloy mainly includes valuable metals. Thus, the valuable metals and other components can be separated into the alloy and the slag, respectively. This is attributable to the fact that the less valuable metals (e.g., Al) have a high affinity for oxygen while the valuable metals have a low affinity for oxygen. In general, for example, aluminum (Al), lithium (Li), carbon (C), manganese (Mn), phosphorus (P), iron (Fe), cobalt (Co), nickel (Ni), and copper (Cu) preferentially oxidize in the order of Al > Li > C > Mn > P > Fe > Co > Ni > Cu. Namely, among them, aluminum (Al) is most prone to oxidation, while copper (Cu) is most resistant to oxidation. Therefore, the less valuable metals (e.g., Al) easily undergo oxidation to form a slag, while the valuable metals (Cu, Ni, and Co) undergo reduction to form an alloy. Thus, the less valuable metals and the valuable metals can be separated into the slag and the alloy, respectively.

During the melting of the raw material, the oxygen partial pressure may be controlled. The oxygen partial pressure may be controlled by a known method. For example, such a method includes introducing a reducing agent or an oxidizing agent into the raw material or the molten material resulting from the melting of the raw material. The reducing agent may be a high-carbon-content material (e.g., graphite powder, graphite granules, coal, coke) or carbon monoxide. A high-carbon-content component may be selected from the raw material and used as the reducing agent. The oxidizing agent may be an oxidizing gas (e.g., air, oxygen) or a low-carbon-content material. A low-carbon-content component may be selected from the raw material and used as the oxidizing agent.

The reducing or oxidizing agent may be introduced by a known method. When in a solid state, the reducing or oxidizing agent may be introduced directly into the raw material or the molten material. When in a gaseous state, the reducing or oxidizing agent may be introduced into the melting furnace through an inlet, such as a lance, attached to the melting furnace. The reducing or oxidizing agent may be introduced at any suitable time. The reducing or oxidizing agent may be introduced simultaneously with the raw material into the melting furnace or may be introduced into the molten material resulting from the melting of the raw material.

The step of melting the raw material by heating may include introducing (adding) a flux. The addition of a flux will lower the melting temperature, reduce the energy cost, and further facilitate the removal of phosphorus (P). The flux is preferably a material including an element capable of combining with an impurity element to form a low-melting-point, basic oxide. Phosphorus can be oxidized into an acidic oxide. As the slag resulting from the melting of the raw material by heating becomes basic, therefore, the phosphorus becomes easy to enter the slag and thus easy to remove. In particular, the flux more preferably includes a calcium compound that is inexpensive and stable at room temperature. Examples of such a calcium compound include calcium oxide (CaO) and calcium carbonate (CaCO₃).

In the step of melting the raw material, the heating temperature is preferably, but not limited to, 1,400°C or more and 1,600°C or less, more preferably 1,450°C or more and 1,550°C or less. At a heating temperature of 1,400°C or more, the valuable metals (Cu, Co, and Ni) will be sufficiently molten and kept in a highly fluid state when forming an alloy. This allows efficient separation of the alloy and the slag by the slag separation step described below. At a heating temperature of 1,450°C or more, the alloy will have very high fluidity, which will further increase the efficiency of separation between impurity components and valuable metals. At a heating temperature above 1,600°C, unnecessary consumption of thermal energy may occur, and heavy deterioration of a refractory component, such as a crucible or a furnace wall, may occur to reduce productivity.

### Slag Separation Step

The slag separation step may include separating the slag from the molten material resulting from the melting step and recovering, as an alloy raw material, the alloy including valuable metals. The slag and the alloy have different specific gravities. The slag, which has a specific gravity lower than that of the alloy, gathers above the alloy. Thus, the slag can be easily separated and collected by specific gravity separation.

### Molten Alloy Production Step

The molten alloy production step (S5) may include producing a molten alloy by melting the recovered alloy, which is used as a raw material, by heating. The details of this step are as described in the first embodiment section.

### Alloy Particle Production Step

The alloy particle production step (S6) may include producing alloy particles by allowing the resulting molten alloy to fall inside the chamber of an atomizer and spraying water onto the falling molten alloy to cool and atomize the molten alloy. The details of this step are as described in the first embodiment section.

### Valuable Metal Recovery Method

The valuable metal (Cu, Ni, and Co) recovery method according to an embodiment includes the steps of: producing an alloy powder (alloy powder production step); and subjecting the alloy powder to leaching treatment with an acid solvent to selectively dissolve nickel (Ni) and cobalt (Co) from the alloy powder into the acid solvent and thereby to separate copper (Cu) (valuable metal separation step). The valuable metal, which is to be recovered, may be at least one metal or alloy selected from the group consisting of copper (Cu), nickel (Ni), cobalt (Co), and any combination of these metals.

]

### Alloy Powder Production Step

The alloy powder production step may include producing an alloy powder by the method described above in the first or second embodiment section.

### Valuable Metal Recovery Step

The valuable metal recovery step may include subjecting the produced alloy powder to leaching treatment with an acid solvent to selectively dissolve nickel (Ni) and cobalt (Co) from the alloy powder into the acid solvent. This step also allows separation of copper (Cu). The acid solvent may be a known acid solution for use in recovery of valuable metals. Such an acid solution includes, for example, sulfuric acid. When the alloy powder is immersed in a sulfuric acid solution, nickel and cobalt will dissolve from the alloy powder into the sulfuric acid solution to form nickel sulfate and cobalt sulfate in the solution. Meanwhile, copper from the alloy powder will turn into copper sulfate, which has low solubility and thus will precipitate as a residue. Thus, the copper component (copper sulfate) can be separated and recovered in the form of precipitates from the solution containing nickel and cobalt.

The alloy powder according to the embodiment features a high ability to undergo acid leaching and a high ability to undergo separation and recovery of metals. Therefore, the valuable metal recovery method according to the embodiment using the alloy powder enables high-efficiency, low-cost separation and recovery of valuable metals (Cu, Ni, and Co).

### EXAMPLES

The present invention will be described in more detail with reference to the examples and comparative examples below. The examples below are not intended to limit the present invention.

### (1) Production of Alloy Powders

### Example 1

In Example 1, an alloy powder was produced by water atomization using discarded lithium ion batteries as a raw material. Specifically, intermediate scrap from lithium ion battery factories and discarded and detoxified, used batteries, which were available from the discarded battery market, were mixed together to give a sample (raw material). Subsequently, the sample was subjected to an alloy powder production experiment, in which the sample was subjected to the melting step (S4) to produce an alloy raw material, which were subjected to the molten alloy production step (S5) and the alloy particle production step (S6) to produce an alloy powder. Table 1 shows the conditions for the alloy powder production.

The molten alloy production step (S5) was performed using a 400 Hz-frequency, induction furnace in which the temperature of the molten alloy was adjusted by controlling the power of the induction furnace. The alloy particle production step (S6) included tilting the induction furnace to pour the molten alloy from the induction furnace into an alumina tundish with a 4 to 7 mm-diameter zirconia nozzle at its base. The amount of the molten alloy being discharged per unit time was kept constant by keeping constant the surface level of the molten alloy in the tundish. The discharge of the molten alloy was adjusted by changing the through-hole diameter of the zirconia nozzle. The water pressure and the water flow rate were adjusted by controlling the power of the high-pressure pump and the opening of the valve. The temperature of water being sprayed was adjusted by controlling the cooling power of the chiller.

In this process, the interior of the empty tundish was heated to at least 1,000°C in advance using an LPG burner in order to ensure that the molten alloy in the induction furnace and the molten alloy coming out of the tundish nozzle were as close as possible to the same temperature. Shortly after the start of the discharge of the molten alloy, this operation eliminated the difference between the temperature of the molten alloy to be in contact with the high-pressure water and the temperature of the molten alloy in the induction furnace.

### Examples 2 and 3

In Examples 2 and 3, an alloy powder was produced as in Example 1 except that the conditions for alloy powder production were changed as shown in Table 1.

### Examples 4 to 7

In Examples 4 to 7, an alloy powder was produced as in Example 1 except that the proportion of discarded lithium ion batteries in the mixture was modified to change the composition of the alloy powder as shown in Table 3 and that the conditions for alloy powder production were changed as shown in Table 1.

### Example 8 (Comparative Example)

In Example 8, an alloy powder was produced by gas atomization using discarded lithium ion batteries as a raw material. Specifically, the molten alloy production step (S5) included melting the alloy in an argon gas atmosphere using an induction furnace with a vacuum chamber. The subsequent alloy particle production step (S6) included subjecting the molten alloy to gas atomization to cool and atomize the molten alloy so that alloy particles were produced.

### Example 9 (Comparative Example)

In Example 9, an alloy powder was produced as in Example 1 except that the conditions for alloy powder production were changed as shown in Table 1 (specifically, the water suction pressure during water atomization was lowered to 3.1 MPa).

### Example 10 (Comparative Example)

In Example 10, the alloy powder produced in Example 5 was oxidized in air.

### (2) Evaluation

The alloy powders obtained in Examples 1 to 10 were evaluated for various properties as shown below.

### Particle Size Distribution

The particle size distribution of the alloy powders was evaluated by dry sieving method. The resulting particle size distribution was used to determine the particle diameter (D10) at a cumulative percentage of 10%, the particle diameter at a cumulative percentage of 50% (D50), and the particle diameter (D90) at a cumulative percentage of 90%, from which (D90 - D10)/D50 was calculated.

### Composition

The composition of the alloy powders was determined using an inductively coupled plasma (ICP) analyzer.

### Oxygen Content

The oxygen content of the alloy powders was measured by infrared absorption method.

### Ability to Undergo Acid Leaching (Recovery Ratio)

The ability of the alloy powder to undergo acid leaching (recovery ratio) was determined by subjecting the alloy powder to acid leaching and then dividing the mass of the target element in the resulting filtrate by the mass of the target element in the alloy powder.

The result of determination of the ability of the alloy powder to undergo acid leaching was used to rate the alloy powder according to the following criteria.
Very good (⊙): The recovery ratio of nickel and cobalt was 98% or more after acid leaching for 6 hours.
Good (O): The recovery ratio of nickel and cobalt was 96% or more after acid leaching for 9 hours.
Poor (x): The recovery ratio of nickel and cobalt was less than 96% after acid leaching for 9 hours.

### Cost

The alloy powder was rated in terms of production cost according to the following criteria.
Good (O): The alloy powder was produced with high productivity using inexpensive equipment.
Poor (x): The alloy powder was produced with low productivity using expensive equipment.

### Comprehensive Evaluation

The alloy powder was comprehensively evaluated in terms of cost and the ability to undergo acid leaching and rated according to the following criteria.
Very good (⊙): The ability of the alloy powder to undergo acid leaching was evaluated as "very good (⊙)" while the alloy powder was evaluated as "good (O)" in terms of cost.
Good (O): The ability of the alloy powder to undergo acid leaching was evaluated as "good (O)" and the alloy powder was evaluated as "good (O)" in terms of cost.
Poor (x): The ability of the alloy powder to undergo acid leaching was evaluated as "poor (x)" or the alloy powder was evaluated as "poor (x)" in terms of cost.

### (3) Results

Table 2 summarizes the results of evaluation of Examples 1 to 10.

The alloy powders of Examples 1 and 2 had an oxygen content of 0.01% by mass or more and 1% by mass or less and a particle diameter D50 of 60 um or more and 85 um or less. The alloy powders of Examples 1 and 2 had a high ability to undergo acid leaching with sulfuric acid and showed a nickel and cobalt recovery ratio of at least 96% after acid leaching for at most 9 hours. Thus, the alloy powders of Examples 1 and 2 were comprehensively evaluated as "good (O)".

The alloy powders of Examples 3 to 7 had an oxygen content of 0.01% by mass or more and 1% by mass or less and a particle diameter D50 of 35 um or more and 55 um or less. The alloy powders of Examples 3 to 7 had a very high ability to undergo acid leaching with sulfuric acid and showed a nickel and cobalt recovery ratio of at least 98% after acid leaching for at most 6 hours. Thus, the alloy powders of Examples 3 to 7 were comprehensively evaluated as "very good (⊙)".

The alloy powders of Examples 1 to 7 produced by water atomization contained many irregularly-shaped particles and had a (D90 - D10)/D50 value of 2.58 to 2.93.

The alloy powder of Example 8 had an oxygen content as low as 0.002% by mass. In Example 8, the alloy particle diameter D50 was controlled to 45 um by controlling the gas flow rate. This resulted in a high ability to undergo acid leaching and resulted in a nickel and cobalt recovery ratio of approximately 98.5% after acid leaching for at most 6 hours.

Unfortunately, the gas atomization requires a vacuum chamber. The productivity of the gas atomization is also low, and the gas atomization requires multiple atomizers to ensure the same throughput as that of a single water atomizer. This is problematic in terms of initial investment and space for equipment. Thus, the alloy powder of Comparative Example 8 was evaluated as "poor (x)" in terms of commercial aspects.

The particles in the alloy powder of Example 8 prepared by gas atomization had near-spherical shapes. The powder of Example 8 had a (D90 - D10)/D50 value of 2.38.

The alloy powder of Example 9 had an oxygen content as low as 0.14% by mass. However, the alloy powder of Example 9 had a particle diameter D50 as large as 110 um. Thus, the alloy powder of Example 9 had a low ability to undergo acid leaching and showed a nickel and cobalt recovery ratio of less than 96% after acid leaching for 9 hours. Thus, the alloy powder of Example 9 was evaluated as "poor (x)" in terms of commercial aspects.

The alloy powder of Example 10 had an oxygen content as high as 2.2% by mass. Thus, the alloy powder of Example 10 had a low ability to undergo acid leaching and showed a nickel and cobalt recovery ratio of less than 96% after acid leaching for 9 hours. Thus, the alloy powder of Example 10 was evaluated as "poor (x)" in terms of commercial aspects.

### [Table 1]

**Table 1: Conditions for Alloy Powder Production**

| | Alloy flow rate (kg/min) | Water flow rate (kg/min) | Water-to-molten alloy ratio | Water pressure (MPa) | Water temperature (°C) | Alloy temperature (°C) |
|---|---|---|---|---|---|---|
| Example 1 | 11.3 | 61.0 | 5.4 | 6.2 | 2-35 | 1514 |
| Example 2 | 11.5 | 61.0 | 5.3 | 12.4 | 2-35 | 1508 |
| Example 3 | 11.4 | 60.0 | 5.3 | 16.8 | 2-35 | 1540 |
| Example 4 | 10.2 | 61.0 | 6.0 | 16.6 | 2-35 | 1515 |
| Example 5 | 11.5 | 61.0 | 5.3 | 16.6 | 2-35 | 1500 |
| Example 6 | 9.4 | 61.1 | 6.5 | 16.4 | 2-35 | 1498 |
| Example 7 | 60.0 | 390.0 | 6.5 | 8.5 | 2-35 | 1550 |
| Example 8* | 6.7 | - | - | - | - | 1506 |
| Example 9* | 11.3 | 61.0 | 5.4 | 3.1 | 2-35 | 1506 |
| Example 10* | 11.5 | 61.0 | 5.3 | 16.6 | 2-35 | 1500 |

| | | | | | | |
|---|---|---|---|---|---|---|
| Note1)The symbol "*" indicates a comparative example. Note2)The symbol "-" indicates no water supply. | | | | | | |

### [Table 2]

**Table 2: Results of Evaluation of Alloy Powders**

| | D50 (µm) | Oxygen content (mass%) | Cost | Recovery ratio | Comprehensive evaluation |
|---|---|---|---|---|---|
| Example 1 | 60∼85 | 0.14 | ○ | ○ | ○ |
| Example 2 | 60∼85 | 0.50 | ○ | ○ | ○ |
| Example 3 | 35∼55 | 0.15 | ○ | ⊚ | ⊚ |
| Example 4 | 35∼55 | 0.54 | ○ | ⊚ | ⊚ |
| Example 5 | 35∼55 | 0.15 | ○ | ⊚ | ⊚ |
| Example 6 | 35∼55 | 0.20 | ○ | ⊚ | ⊚ |
| Example 7 | 35∼55 | 0.18 | ○ | ⊚ | ⊚ |
| Example 8* | 45 | 0.002 | × | ⊚ | × |
| Example 9* | 110 | 0.14 | ○ | × | × |
| Example 10* | 35∼55 | 2.20 | ○ | × | × |

| | | | | | |
|---|---|---|---|---|---|
| Note1)The symbol "*" indicates a comparative example. | | | | | |

### [Table 3]

**Table 3: Results of Quantitative Chemical Analysis of Alloy Powders**

| | Ni | Cu | Co | Fe | Mn | Other element content | Other elements detected |
|---|---|---|---|---|---|---|---|
| Example 1 | 11.3 | 75.4 | 11.4 | 1.5 | 0.4 | <0.01 | - |
| Example 2 | 11.3 | 75.4 | 11.4 | 1.5 | 0.4 | <0.01 | - |
| Example 3 | 11.3 | 75.4 | 11.4 | 1.5 | 0.4 | <0.01 | - |
| Example 4 | 23.9 | 74.3 | 0.4 | 1.26 | 0.07 | 0.1 | P, W, Cr, Zn, Si |
| Example 5 | 12.2 | 73.7 | 12.5 | 1.5 | 0.1 | <0.01 | - |
| Example 6 | 45.8 | 43.9 | 5.1 | 3.1 | 1.9 | 0.2 | P,W,Cr,Zn,Si |
| Example 7 | 33.6 | 61.4 | 2.9 | 0.96 | 0.097 | 0.1 | P, W, Cr, Zn, Si |
| Example 8* | 12.1 | 73.7 | 12.5 | 1.6 | 0.1 | <0.01 | - |
| Example 9* | 11.3 | 75.4 | 11.4 | 1.5 | 0.4 | <0.01 | - |
| Example 10* | 12.2 | 73.7 | 12.5 | 1.5 | 0.1 | <0.01 | - |

| | | | | | | | |
|---|---|---|---|---|---|---|---|
| Note1)The symbol "*" indicates a comparative example._{∘} Note2)The symbol "-" indicates "undetected". | | | | | | | |

### EXPLANATION OF REFERENCE NUMERALS

1: Copper-nickel-cobalt
2: Crucible furnace
3: Nozzle
4: Tundish
5: Surface level of molten alloy
6: Chamber
7: Inert gas such as nitrogen gas
8: Filling gas
9: Gas discharge structure
10: Falling molten alloy
11: High-pressure water nozzle
12: High-pressure water
13: Water phase
14: Alloy particle
15: Water supply pump
16: Chiller

## Claims

1. An alloy powder comprising copper (Cu), nickel (Ni), and cobalt (Co) as constituents,
the alloy powder having a volume particle size distribution with a particle diameter at a cumulative percentage of 50% (D50) of 30 um or more and 85 um or less,
the alloy powder having an oxygen content of 0.01% by mass or more and 1.00% by mass or less.

2. The alloy powder according to claim 1, wherein the particle diameter at a cumulative percentage of 50% (D50) is 35 um or more and 55 um or less.

3. The alloy powder according to claim 1 or 2, wherein D10, D50, and D90 satisfy the relation 2.50 ≤ (D90 - D10)/D50 ≤ 3.00, D10, D50, and D90 respectively representing a particle diameter at a cumulative percentage of 10%, a particle diameter at a cumulative percentage of 50%, and a particle diameter at a cumulative percentage of 90% in the volume particle size distribution.

4. The alloy powder according to any one of claims 1 to 3, comprising: 24.0 to 80.0% by mass of copper (Cu); 0.1 to 15.0% by mass of cobalt (Co); 10.0 to 50.0% by mass of nickel (Ni); 0.01 to 10.0% by mass of iron (Fe); and 0.01 to 5.0% by mass of manganese (Mn) with the remainder being unavoidable impurities.

5. A method for producing the alloy powder according to any one of claims 1 to 4, the method comprising the steps of:
preparing an alloy raw material comprising copper (Cu), nickel (Ni), and cobalt (Co) as constituents;
producing a molten alloy by melting the alloy raw material by heating; and
producing alloy particles by allowing the molten alloy to fall inside a chamber of an atomizer and spraying water onto the falling molten alloy to cool and atomize the molten alloy, wherein
the step of producing alloy particles comprises spraying the water at a pressure of 6 MPa or more and 20 MPa or less and setting, at 5.0 or more and 7.0 or less, the ratio (water-to-molten alloy ratio) of the mass flow rate of water being sprayed to the mass flow rate of the falling molten alloy.

6. The method according to claim 5, wherein the step of producing alloy particles comprises allowing the molten alloy to fall at a mass flow rate of 10 kg/minute or more and 75 kg/minute or less.

7. The method according to claim 5 or 6, wherein the step of producing alloy particles comprises spraying the water at a temperature of 2°C or more and 35°C or less.

8. The method according to any one of claims 5 to 7, wherein the step of producing a molten alloy comprises heating the molten alloy at a temperature of 1,430°C or more and 1,590°C or less.

9. The method according to any one of claims 5 to 8, wherein the alloy raw material is derived from discarded lithium ion batteries.

10. A method for producing the alloy powder according to any one of claims 1 to 4, the method comprising the steps of:
preparing discarded lithium ion batteries as a raw material;
melting the raw material by heating to form an alloy including copper (Cu), nickel (Ni), and cobalt (Co) and a slag;
separating the slag and recovering the alloy as an alloy raw material;
producing a molten alloy by melting the alloy raw material by heating; and
producing alloy particles by allowing the molten alloy to fall inside a chamber of an atomizer and spraying water onto the falling molten alloy to cool and atomize the molten alloy, wherein
the step of producing alloy particles comprises spraying the water at a pressure of 6 MPa or more and 20 MPa or less and setting, at 5.0 or more and 7.0 or less, the ratio (water-to-molten alloy ratio) of the mass flow rate of water being sprayed to the mass flow rate of the falling molten alloy.

11. A valuable metal (Ni, Co, and Cu) recovery method comprising the steps of:
producing an alloy powder by the method according to any one of claims 5 to 10; and
subjecting the alloy powder to leaching treatment with an acid solvent to selectively dissolve nickel (Ni) and cobalt (Co) from the alloy powder into the acid solvent and thereby to separate copper (Cu).
